# EUROPÄISCHE PATENTSCHRIFT

(11) **EP 4 298 351 B1**
(45) Veröffentlichungstag und Bekanntmachung des Hinweises auf die Patenterteilung: **17.09.2025**
(21) Anmeldenummer: 22708120.5
(22) Anmeldetag: 24.02.2022
(51) Int. Cl.: F16B 37/04, F16B 37/08

(54) **VORRICHTUNG, INSBESONDERE SPANNELEMENT UND VERFAHREN ZUR ANWENDUNG DIESES SPANNELEMENTS**
DEVICE, IN PARTICULAR CLAMPING ELEMENT, AND METHOD FOR USING SAID CLAMPING ELEMENT
DISPOSITIF, EN PARTICULIER ÉLÉMENT DE SERRAGE, ET PROCÉDÉ D'UTILISATION DUDIT ÉLÉMENT DE SERRAGE

(30) Priorität: 25.02.2021 DE 102021201814
(43) Veröffentlichungstag der Anmeldung: 03.01.2024
(73) Patentinhaber: FS Innotech GmbH, 87637 Eisenberg (DE)
(72) Erfinder: SCHNEIDER, Ferdinand, 87629 Füssen (DE)
(74) Vertreter: MERH-IP Matias Erny Reichl Hoffmann Patentanwälte PartG mbB
(86) Internationale Anmeldenummer: PCT/EP2022/054675
(87) Internationale Veröffentlichungsnummer: WO 2022/180169

(56) Entgegenhaltungen:
- EP-A2- 1 054 171
- WO-A1-02/073046
- DE-A1- 2 723 058
- GB-A- 1 545 707
- US-A- 3 680 620
- US-B2- 9 458 952

## Beschreibung

Die vorliegende Erfindung betrifft ein Spannelement, insbesondere einen T-Nutenstein und ein Verfahren zur Anwendung eines Spannelements in einer Öffnung, insbesondere einer T-Nut. Das teilbare Spannelement bzw. der teilbare T-Nutenstein und deren Anwendung erlauben eine vereinfachte und sichere Montage bei einer gleichzeitig hohen Haltekraft.

Aus dem Stand der Technik sind Spannelemente bekannt, beispielsweise T-Nutensteine nach DIN 508 oder das Dokument GB 1 545 707 A.

Beim Einsetzen von bekannten T-Nutensteinen in längsgezogene Profile, z.B. C-Profile oder T-Nutenplatten, ist es bisher üblich die Spannelemente über die offenen Enden der Profile ein- und auszuführen. Die T-Nutensteine bspw. nach DIN 508 oder ähnlich können nur von der offenen Seite des Profils eingeführt werden. Das Ein- und Ausführen der T-Nutensteine in eine Öffnung auf der Oberseite des Profils ist nicht möglich, da der T-Nutenstein breiter ist als die Öffnung auf der Oberseite des Profils. Somit verhindert die Form des T-Nutensteins das Einsetzen in die Öffnung auf der Oberseite des Profils.

Bei diesen herkömmlichen T-Nutensteinen ist es problematisch, dass dann, wenn bereits ein oder zwei T-Nutensteine in der Öffnung des Profils verwendet werden, oder die Seitenöffnungen des Profils nicht zugänglich sind, kein weiterer T-Nutenstein dazwischen platziert werden kann. Da der Ein- und Ausbau der herkömmlichen T-Nutensteine nur über die offenen Enden des Profils möglich ist, müssten alle bereits eingeführten T-Nutensteine, die das Ende des Profils blockieren, herausgenommen werden, um den neuen T- Nutenstein in die gewünschte Zwischenposition zu bringen. Der Nachteil der bekannten T- Nutensteine und deren Verwendung in der Öffnung des entsprechenden Profils ist also, dass das Ein- und Aussetzen zusätzlicher T-Nutensteine aufwendig ist. Dadurch werden die Fertigungszeiten von Werkzeugen und anderen herzustellenden Produkten, durch aufwendige Umspannarbeiten verlängert. Das führt zu längeren Rüstzeiten, was wiederum die Kosten der Produktion erhöht. Ein Profil kann eine längliche Form mit einer Öffnung auf der Oberseite und entlang der Längsachse und zumindest einem offenen Ende haben, in das T-Nutensteine eingeschoben werden können. Diese offenen Enden sind die Seitenöffnungen des Profils. Das Profil kann demnach ein längsgezogenes Profil sein, z.B. aus der Fertigung bekannte C-Profile, oder anderer Strangpressprofile wie Halbzeuge und/oder T-Nutenplatten. Die Öffnung im Profil kann auch als Nut, bzw. T-Nut bezeichnet werden und ist zu der Oberseite des Profils hin offen.

Hierzu sind Lösungen von T-Nutensteinen bspw. in der Form eines Rhombus bekannt, weshalb ein solcher T-Nutenstein auch "Rhombus" genannt wird. Ein Rhombus ist schmal und passt durch Öffnung auf der Oberseite des Profils. Dementsprechend kann der Rhombus an einer beliebigen Stelle zwischen zwei befestigten Werkstücken in die Öffnung auf der Oberseite des Profils eingeführt werden. Der Rhombus hat aber erhebliche Nachteile. Ein Rhombus ist recht dünn und sowohl das Innengewinde des Rhombus als auch der Rhombus selbst sind nicht besonders belastbar. Bei hoher Belastung kann der Rhombus brechen. Außerdem hat der Rhombus als Variante eines T-Nutensteins den Nachteil, dass er verdreht in die Nut eingeführt werden muss. Beim Anziehen der Schrauben, ist die exakte Lage des Rhombus nicht kontrollierbar und es kann passieren, dass die unteren Auflagen des Rhombus innerhalb des Profils nicht richtig sitzen. Die Auflagefläche, welche der Kontaktfläche zwischen der Innenseite von Unterschneidungen des Profils und dem Rhombus entspricht, ist relativ klein und kann zur Beschädigung des Profils selbst und/oder des Rhombus führen.

Eine Aufgabe der vorliegenden Erfindung ist es ein Spannelement, insbesondere einen T-Nutenstein und ein Verfahren zur Anwendung dieses Spannelements bereitzustellen, die eine einfache, effiziente und sichere Montage des Spannelements, bei einer gleichzeitig hohen möglichen Haltekraft erlauben.

Zur Lösung der Aufgabe werden die Merkmale der unabhängigen Ansprüche vorgeschlagen. Vorteilhafte Weiterbildungen finden sich in den Unteransprüchen.

Das Spannelement kann ein Nutenstein, insbesondere ein T-Nutenstein sein. Darüber hinaus kann das Spannelement auch eine Spannmutter oder eine Mutter für eine T-Nut sein.

Befestigungsmittel können Schrauben sein. Dies kann bspw. eine M12 DIN 912 12.9 Stahl-Zylinderschraube sein. Befestigungsmittel können auch andere Schrauben sein, solange diese zu der Größe der Durchgangsbohrung mit dem entsprechenden Innengewinde des Spannelements passen. Das Befestigungsmittel kann auch eine Gewindestange sein.

Gemäß der Erfindung umfasst ein Spannelement eine Durchgangsbohrung mit einem Innengewinde und zumindest zwei voneinander trennbare Elemente, nämlich ein erstes Element und ein zweites Element, die in einem zusammengesetzten Zustand des Spannelements die jeweilige Innengewindeabschnitte der des Innengewindes der Durchgangsbohrung bilden.

Dies hat den Vorteil, dass jeweils ein Element des Spannelements schmaler ist als das gesamte Spannelement in einem zusammengesetzten Zustand. Dadurch kann jedes der Elemente einzeln über die Öffnung auf der Oberseite des Profils, statt über die Seitenöffnungen des Profils, eingesetzt und herausgenommen werden. Dies hat den weiteren Vorteil, dass, wenn in der Öffnung des Profils bereits mindestens ein erstes Spannelement angeordnet ist und die Seitenöffnungen des Profils blockiert, trotzdem an einer beliebigen Stelle im Profil ein weiteres Spannelement in die Öffnung eingesetzt werden kann. Dies wird vorteilhafter Weise dadurch möglich, dass die Elemente in einem nicht-zusammengesetzten Zustand des Spannelements, einzeln durch die Öffnung auf der Oberseite des Profils, statt über die Enden des Profils, eingesetzten werden können.

Dabei weist jedes der Elemente zumindest einen Großsegment-Innengewindeabschnitt mit einem Winkel α von mehr als 180° auf.

Dies hat den Vorteil, dass jedes der Elemente für sich genommen mit einem Befestigungsmittel, wie bspw. einer Schraube, verbunden werden können. Das bedeutet, dass jeweils ein Element in einem nicht-zusammengesetzten Zustand des Spannelements alleine an einem Befestigungsmittel befestigt werden kann, ohne dass das erste Element dazu das zweite Element, und/oder umgekehrt, benötigt. Außerdem ermöglichen die Großsegment-Innengewindeabschnitte, die mit einem Winkel α von mehr als 180° in jedem der einzelnen Elemente ausgebildet sind, dass jedes der einzelnen Elemente das Befestigungsmittel zu mehr als die Hälfte umschließt, wodurch das Befestigungsmittel besonders stabil gehalten wird und die Elemente eine Wirkung haben können wie im Fall einer einteiligen Mutter. Die einzelnen Elemente mit den Großsegment-Innengewindeabschnitten, die einen Winkel α von mehr als 180° aufweisen, können sich entsprechend einer einteiligen Mutter nicht mehr vom Befestigungsmittel lösen. In anderen Worten, da jedes der Elemente einen Großsegment-Innengewindeabschnitt enthält, der mehr als einem halben Gewinde entspricht, also einem Winkel α von mehr als 180°, kann jedes der einzelnen Elemente unabhängig voneinander am Befestigungsmittel befestigt werden.

Außerdem können sich die Großsegment-Innengewindeabschnitte der jeweiligen Elemente entlang einer Mittelachse der Durchgangsbohrung abwechseln.

Dies hat den Vorteil, dass das Befestigungsmittel von mehreren sich abwechselnden Innengewindeabschnitten gehalten wird und dadurch mehr Innengewindefläche in Kontakt mit dem Befestigungsmittel steht. Das erhöht die mögliche Haltekraft des Spannelements und eine Haltesicherheit.

Weiter weist jedes der Elemente des Spannelements zumindest einen Kleinsegment-Innengewindeabschnitt mit einem Winkel β von weniger als 180° auf, wobei sich die Kleinsegment-Innengewindeabschnitte der jeweiligen Elemente entlang der Mittelachse abwechseln.

Der Vorteil ist, dass das Befestigungsmittel zusätzlich zu den Großsegment-Innengewindeabschnitten auch in Kontakt mit den Kleinsegment-Innengewindeabschnitten der einzelnen Elemente tritt. Dies führt dazu, dass das Befestigungsmittel beim Anbringen an das Spannelement, sowohl von den Großsegment-Innengewindeabschnitten als auch von den Kleinsegment-Innengewindeabschnitten geführt wird und deshalb eine präzise Positionierung des Befestigungsmittels möglich wird. Des Weiteren steigt, durch die zusätzliche Innengewindefläche der Kleinsegment-Innengewindeabschnitte, die übertragbare Haltekraft des Spannelements auf das Befestigungsmittel.

Jeweils einer der zumindest einen Großsegment-Innengewindeabschnitte des ersten Elements kann mit jeweils einem der Kleinsegment-Innengewindeabschnitte des zweiten Elements fluchten und dabei das Innengewinde der Durchgangsbohrung mit einem Winkel α + β von im Wesentlichen 360° bilden.

Dies hat den Vorteil, dass das Spannelement das Befestigungsmittel vollständig, in diesem Fall im Wesentlichen zu 360°, umschließt. Dadurch wird gewährleistet, dass das Spannelement beim Auftreten hoher Spannkräfte, mit Momenten von bspw. 70000Nm (bei obiger Materialauswahl), unbeschädigt bleibt.
Der Winkel α kann zwischen 200° und 300°, weiter bevorzugt zwischen 220° und 280° und weiter bevorzugt im Wesentlichen bei 270° liegen.
Der Winkel β kann zwischen 60° und 160°, weiter bevorzugt zwischen 80° und 140° und weiter bevorzugt im Wesentlichen bei 90° liegen.
Die vorgenannte Winkelbereiche stellen lediglich Beispiele dar.

Das erste Element des Spannelements kann einen Vorsprung und das zweite Element des Spannelements eine Nut aufweisen. In einem zusammengesetzten Zustand der Elemente kann der Vorsprung des ersten Elements in der Nut des zweiten Elements angeordnet sein.

Dies hat den Vorteil, dass die einzelnen Elemente des Spannelements ähnlich zweier Zahnräder ineinandergreifen und die Spannkraft optimal auf die einzelnen Elemente verteilt wird. Wenn das Spannelement in einem zusammengesetzten Zustand das Befestigungsmittel hält und der Vorsprung vorteilhafterweise in der Nut des zweiten Elements ist, ähnelt der Aufbau des Spannelements einem Ziegelmauerwerk. Dadurch ist das Spannelement in einem zusammengesetzten Zustand, obwohl es aus trennbaren Elementen besteht, besonders stabil beim Auftreten hoher Spannkräfte.

Der Vorsprung des ersten Elements des Spannelements kann den Großsegment-Innengewindeabschnitt umfassen und die Nut des zweiten Elements den fluchtenden Kleinsegment-Innengewindeabschnitt.

Dies hat den Vorteil, dass das Spannelement im zusammengesetzten Zustand im Wesentlichen ein vollständiges Innengewinde, also 360°, bildet und somit das Befestigungsmittel vollständig, zu 360°, umgibt und besonders stabil hält, da die Kontaktfläche zwischen dem Innengewinde des Spannelements und der Oberfläche des Befestigungsmittel maximal groß ist. So findet eine optimale Kraftverteilung statt und das Spannelement kann auch besonders hohe Spannkräfte übertragen.

Der Vorsprung des ersten Elements des Spannelements kann einen vieleckigen, insbesondere viereckigen, Querschnitt aufweisen.

Durch den vieleckigen, insbesondere viereckigen Querschnitt des Vorsprungs, kann sichergestellt werden, dass die Kraftverteilung im zusammengesetzten Zustand des Spannelements besonders optimal zwischen den trennbaren Elementen aufgeteilt wird. Möglich sind auch andere Arten von Vielecken. Insbesondere können die Kanten des Vorsprungs angefast oder abgerundet sein. Dies hat den Vorteil, dass das erste Element in das zweite Element besonders einfach eingeführt werden kann, da die, mit einem vorbestimmten Winkel - von bspw. 30° - angefaste Kante des Vorsprungs als Einführhilfe dient.

Der Vorsprung des ersten Elements des Spannelements kann drei zueinander im Wesentlichen rechtwinklige äußere Führungsflächen und die Nut des zweiten Elements, kann drei zueinander im Wesentlichen rechtwinklige innere Führungsflächen aufweisen.

Dies hat den Vorteil, dass die Elemente genau aufeinander abgestimmt sind und so ein Zusammensetzen des Spannelements besonders einfach und reibungsarm möglich ist. Die Führungsflächen des Vorsprungs und der Nut des ersten bzw. zweiten Elements treten in Kontakt und ermöglichen ein sicheres, zeitsparendes und somit effizientes Zusammensetzen des Spannelements. Außerdem wird im zusammengesetzten Zustand eine optimale Verteilung der Spannkraft entlang den Führungsflächen ermöglicht.

Dabei kann es vorteilhaft sein, dass die Führungsflächen stirnseitige angefaste Abschnitte aufweisen, die wie eine Fase - bspw. mit 30° - zur Stirnseite der Elemente abgeschrägt sind, so dass beim Zusammensetzen der trennbaren Elemente zum Spannelement diese Abschnitte ein Ineinanderschieben der Elemente erleichtern und ein Verkanten der Elemente beim Zusammenführen verhindern.

Weiterhin kann die Nut (7) beidseitig eine nach außen in Längsrichtung L offene Bodenfläche (72) aufweisen und das erste Element (4) kann eine in Längsrichtung L offene Endfläche (82) aufweisen, zum Bewirken einer Bewegbarkeit des Vorsprungs (8) in der Nut (7) in Längsrichtung L.

Die Elemente des Spannelements können verzahnt ineinandergreifen.

Dies hat den Vorteil, dass durch die Verzahnung der Elemente die auftretenden Kräfte innerhalb des Spannelements gleichmäßiger verteilt werden, was dazu führt, dass das Spannelement auch hohe auftretende Spannkräfte übertragen kann und stabil bleibt ohne zu zerbrechen.

Die Elemente des Spannelements können einen teilbaren T-Nutenstein für eine T-Nut bilden.

Dies hat den Vorteil, dass die Spannkräfte zwischen dem Spannelement und der T-Nut optimal verteilt werden können, was dazu führt, dass Werkstücke, mit einer hohen Spannkraft sicher an der T-Nut befestigt werden können, ohne dass das Spannelement und/oder die T-Nut bzw. das Werkstück selbst beschädigt wird.

Die Elemente des Spannelements können an ihren unteren Bereichen jeweilige Vorstehungen aufweisen und in entsprechende Hinterschneidungen einer Öffnung, insbesondere einer T-Nut, eingreifen.

Dies hat den Vorteil, dass die Kontaktflächen zwischen den Vorstehungen und der entsprechenden Hinterschneidungen der Öffnung sehr groß ist und es dadurch möglich wird hohe Spannkräfte zu übertragen.

Das erfindungsgemäße Verfahren kann in einer Anwendung des teilbaren Spannelements ein Einsetzen des ersten Elements in eine Öffnung und das Einsetzen des zweiten Elements in die Öffnung umfassen, derart, dass der Vorsprung in die Nut des zweiten Elements eingreifen, die Nut den Vorsprung des ersten Elements aufnehmen kann, die inneren Führungsflächen der Nut und die äußeren Führungsflächen des Vorsprungs in Kontakt treten können, die Großsegment-Innengewindeabschnitte und die Kleinsegment-Innengewindeabschnitte fluchten und/oder die Vorstehungen der Elemente in die jeweiligen Hinterschneidungen der Öffnung, insbesondere der T-Nut, eingreifen können. Weiterhin kann ein Einschrauben einer zum Innengewinde passenden Schraube zum Fixieren der Elemente zueinander und zum Verspannen des Spannelements in der Öffnung, insbesondere der T-Nut, erfolgen.

Dies und/oder die Gesamtheit der Teile der vorstehenden Merkmale haben den Vorteil, dass, wenn die Enden der T-Nut blockiert sind, es trotzdem möglich ist, das Spannelement in die Öffnung auf der Oberseite der T-Nut einzusetzen, um ein Werkstück zu fixieren und das Spannelement ebenso wieder aus der T-Nut durch die Öffnung auf der Oberseite heraus zu nehmen. Dies ist möglich, da die Elemente des Spannelements einzeln in die Öffnung auf der Oberseite des Profils eingesetzt werden können und das Spannelement erst innerhalb der Öffnung des Profils zusammengesetzt wird. Da ein einzelnes Element des Spannelements weniger breit ist wie das zusammengesetzte Spannelement, passen die Elemente getrennt voneinander durch die Öffnung auf der Oberseite des Profils und können dann bspw. in Längsrichtung des Profils innerhalb der Öffnung zusammengeschoben werden, um dadurch das zusammengesetzte Spannelement zu formen. Dies führt dazu, dass die Montage (Rüstzeit) verkürzt werden kann, indem die bereits fixierten Werkstücke, die bspw. die Seitenöffnungen des Profils blockieren, nicht zuerst abgebaut werden müssen.

Vorteilhafte Ausgestaltungen und weitere Details der vorliegenden Erfindung werden im Folgenden anhand verschiedener Ausführungsbeispiele mit Bezug auf die schematischen Figuren beschrieben. In den schematischen Figuren wird die Erfindung näher erläutert.

Es zeigen:
Figur 1 eine stirnseitige Seitenansicht in einem zusammengesetzten Zustand;
Figur 2 eine Draufsicht des Spannelements in einem zusammengesetzten Zustand;
Figur 3 eine stirnseitige Seitenansicht des Spannelements in einem nicht-zusammengesetzten Zustand mit einem ersten und zweiten trennbaren Element.
Figur 4 eine Draufsicht des Spannelements in einem nicht-zusammengesetzten Zustand mit einem ersten und zweiten trennbaren Element;
Figur 5a eine Schnittansicht S1 aus Figur 3;
Figur 5b eine Schnittansicht S2 aus Figur 3;
Figur 5c eine Schnittansicht S3 aus Figur 3;
Figur 6 eine perspektivische Ansicht des Spannelements in einem nicht-zusammengesetzten Zustand mit dem ersten und zweiten Element; und
Figur 7 das Spannelement im eingebauten Zustand.

Im Folgenden werden verschiedene Beispiele der vorliegenden Erfindung detailliert unter Bezugnahme auf die Figuren beschrieben. Gleiche bzw. ähnliche Elemente werden mit gleichen Bezugszeichen bezeichnet.

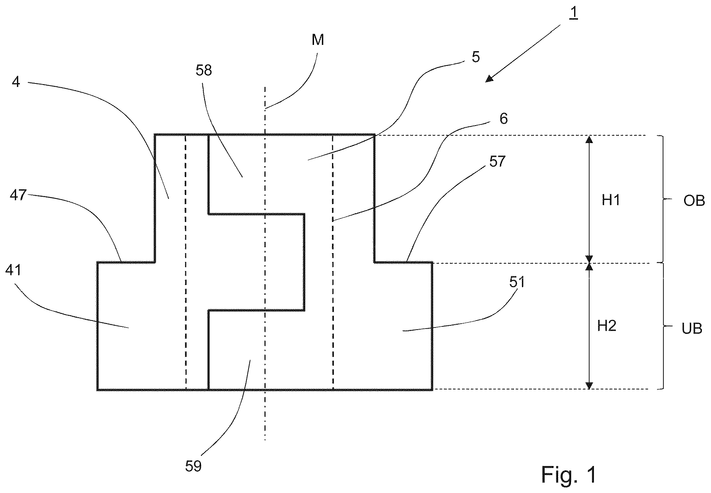

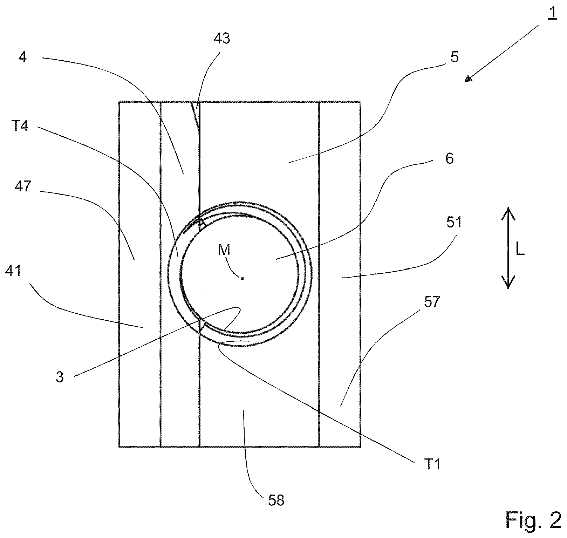

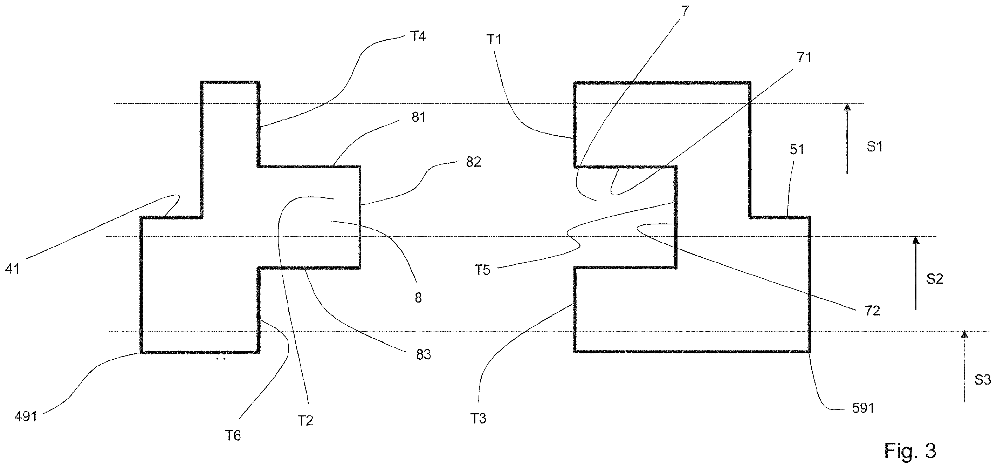

Figuren 1 und 2 zeigen das Spannelement 1 mit einer Durchgangsbohrung 6 mit einem Innengewinde 3 in einem zusammengesetzten Zustand. In Figur 1 ist die Durchgangsbohrung 6 mit Innengewinde 3 schematisch durch parallele gestrichelte Linien dargestellt. Außerdem hat das Spannelement 1 zwei voneinander trennbare Elemente 4, 5. Das erste Element 4 und zweite Element 5 bilden in dem zusammengesetzten Zustand das Spannelement 1, wie in den Figuren 1, 2 und 7 gezeigt. Figuren 3, 4, 5 und 6 zeigen das Spannelement 1 in einem nicht-zusammengesetzten Zustand.

Die zwei voneinander trennbaren Elemente 4, 5 haben jeweilige Großsegment-Innengewindeabschnitte T1, T2, T3 und Kleinsegment-Innengewindeabschnitte T4, T5, T6, die im zusammengesetzten Zustand des Spannelements 1 jeweils einem Teil des Innengewindes 3 der Durchgangsbohrung 6 entsprechen. Wie bspw. in Figur 1 und 3 dargestellt, sind in jedem der Elemente 4, 5 zumindest einer der Großsegment-Innengewindeabschnitte T1, T2, T3 und Kleinsegment-Innengewindeabschnitte T4, T5, T6 vorhanden, die entlang einer Mittelachse M der Durchgangsbohrung 6 abwechselnd angeordnet sind. Die Mittelachse M ist, wie bspw. in Figur 1 gezeigt, durch eine gepunktetgestrichelte Linie dargestellt.

Das heißt, das Innengewinde 3 der Durchgangsbohrung 6 besteht im zusammengesetzten Zustand des Spannelements 1 aus den Großsegment-Innengewindeabschnitten T1, T2, T3 und den Kleinsegment-Innengewindeabschnitten T4, T5, T6, die jeweils miteinander fluchten.

Wie in der Figur 1 gezeigt, hat das Spannelement 1 in einem zusammengesetzten Zustand, beginnend von einer Oberseite O des Spannelements 1 entlang der Mittelachse M in Richtung der Unterseite U des Spannelements 1 einen bestimmten Aufbau. Bezüglich der Großsegment-Innengewindeabschnitte ist zuerst das zweite Element 5 des Spannelements 1 mit dem Großsegment-Innengewindeabschnitt T1 ausgebildet, dem dann ein weiterer Großsegment-Innengewindeabschnitt T2 des ersten Elements 4 folgt, auf das wiederum ein weiterer Großsegment-Innengewindeabschnitt T3 des zweiten Elements 5 folgt. Im zusammengesetzten Zustand des Spannelements 1, wie bspw. in Figur 1 gezeigt, hat das zur Folge, dass die Kleinsegment-Innenabschnitte T4, T5, T6 entsprechend gegenteilig angeordnet sind. In anderen Worten ist, wie bspw. der Figur 1 zu entnehmen ist, entlang der Mittelachse M, angefangen von der Oberseite O in Richtung der Unterseite U des Spannelements 1, ist zuerst das erste Element 4 des Spannelements 1 mit dem Kleinsegment-Innengewindeabschnitt T4 ausgebildet, dem dann ein weiterer Kleinsegment-Innengewindeabschnitt T5 im zweiten Elements 5 folgt, auf das wiederum ein weiterer Kleinsegment-Innengewindeabschnitt T6 des ersten Elements 4 folgt. Das hat zur Folge, dass in einem zusammengesetzten Zustand des Spannelements 1, wie in Figur 1 gezeigt, die Elemente 4, 5 verzahnt ineinandergreifen. Das heißt, der Aufbau des Spannelements 1 ähnelt einem Ziegelmauerwerk.

Außerdem liegen sich durch diesen bestimmten Aufbau jeweils ein Großsegment-Innenabschnitt T1, T2, T3 und ein Kleinsegment-Innenabschnitt T4, T5, T6 gegenüber und fluchten, so dass, wie bspw. in den Figuren 1 und 2 dargestellt, das Innengewinde 3 der Durchgangsbohrung 6 im zusammengesetzten Zustand des Spannelements 1 einem vollständig umlaufenden Innengewinde mit 360° entspricht.

Das Spannelement 1, somit auch die Elemente 4, 5, weisen einen oberen Bereich OB und einen unteren Bereich UB auf, wobei wie in Figur 1 gezeigt, die Gesamthöhe des Spannelements 1 stirnseitig aus einer ersten Höhe H1 des oberen Bereichs OB und einer zweiten Höhe H2 des unteren Bereichs UB gebildet wird. In der stirnseitigen Ansicht des Spannelements 1 im zusammengesetzten Zustand in Figur 1, kann der obere Bereich OB schmaler als der untere Bereich UB sein. Es sind hier allerdings auch andere Dimensionen denkbar. Im zusammengesetzten Zustand sind Vorstehungen 41, 51, die im unteren Bereich UB angeordnet sind, die breitesten Stellen des Spannelements 1. Jedes der Elemente 4, 5 ist mit jeweils einer der entsprechenden Vorstehungen 41, 51 ausgebildet. Im zusammengesetzten Zustand des Spannelements 1 umfasst der untere Bereich UB die Vorstehungen 41, 51 der Elemente 4, 5 und die Unterseite U des Spannelements 1. Das Verhältnis der Höhen H1, H2 der oberen und unteren Bereiche OB, UB und die Breite der Vorstehungen 41, 51 sind in den Figuren, wie bspw. der Figur 1, nur schematisch dargestellt und können entsprechend der Öffnung 10 des Profils 11 variieren.

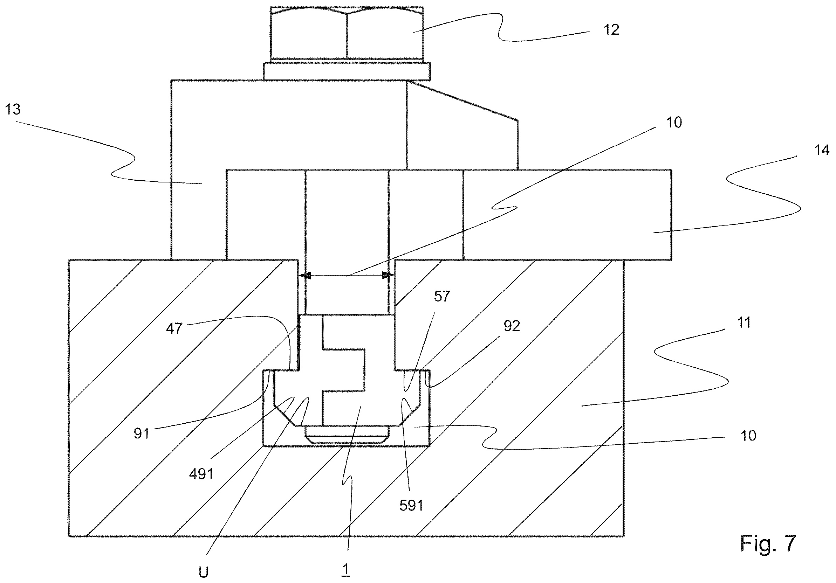

Die Vorstehungen 41, 51 haben jeweils eine obere Kontaktfläche 47, 57 und können wie in Figur 7 gezeigt, in die jeweiligen Hinterschneidungen 91, 92 des Profils 11 eingreifen und somit eine Spannkraft auf ein zu befestigendes Werkstück 14 übertragen.

Der untere Bereich UB der Elemente 4, 5 hat jeweils Endbereiche 491, 591, die mit der Unterseite U des Spannelements 1 als rechtwinklige Kanten ausgebildet sein können, wie bspw. in Figur 1 gezeigt. Andererseits, wie in Figur 7 dargestellt, können die Endbereiche 491, 591 auch Fasen enthalten und somit abgeschrägt ausgebildet sein. Statt der Fase ist auch ein Abrunden der Endbereiche 491, 591 möglich, so dass eine abgerundeter Endbereich 491, 591 entsteht (nicht gezeigt). Die beiden Endebereiche 491, 591 können auch verschiedenartig geformt sein, der Endbereich 491 als Fase und der Endbereich 591 als Abrundung und/oder umgekehrt.

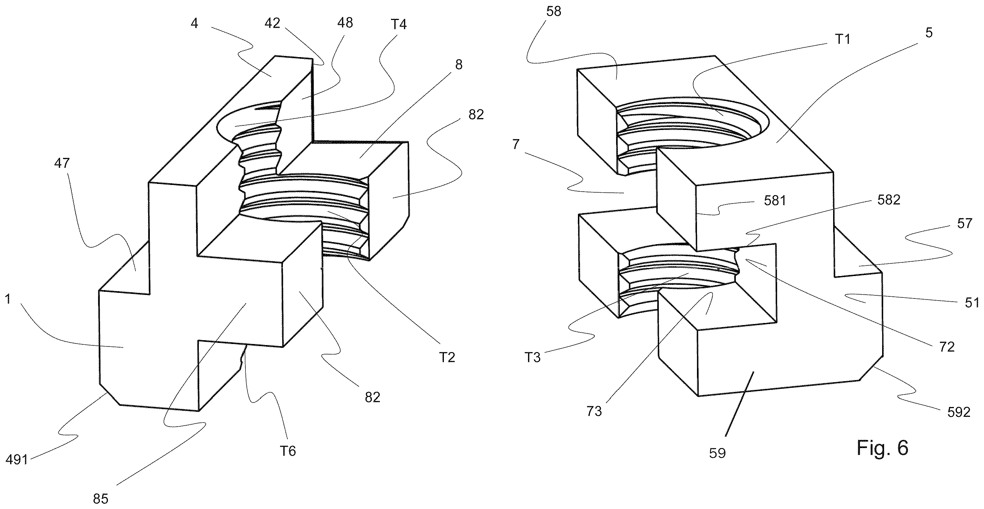

Bspw. in den Figuren 3 und 6 ist gezeigt, dass das erste Element 4 einen Vorsprung 8 und das zweite Element 5 eine Nut 7 aufweist. Die Nut 7 ist zwischen einem oberen Abschnitt 58 und einem unteren Abschnitt 59 des zweiten Elements 5 vorgesehen. Wie in der Figur 1 gezeigt, nimmt die Nut 7 den Vorsprung 8 auf, wenn das Spannelement 1 im zusammengesetzten Zustand ist. Der Vorsprung 8 umfasst dabei in Figur 3 den Großsegment-Innengewindeabschnitt T2 und die Nut 7 den Kleinsegment-Innengewindeabschnitt T5. Nicht in den Figuren 3 und 6 gezeigt, aber analog zu Figur 2, fluchten im zusammengesetzten Zustand des Spannelements 1 der Großsegment-Innengewindeabschnitt T2 und der Kleinsegment-Innengewindeabschnitt T5 und bilden einen Innengewindeteilabschnitt des Innengewindes 3, der im Wesentlichen 360° hat (nicht gezeigt).

Die Figuren 1, 3 und 6 zeigen weiterhin, dass die Nut 7 auf beiden Endseiten stirnseitig bzw. an den längsseitigen Enden eine offene Bodenfläche 72 aufweist. Dadurch ist die Nut 7 an beiden Endseiten offen. Der Vorsprung 8 kann daher in Längsrichtung L (siehe Figur 2) in der Nut 7 bewegt werden.

Das erste Element 4 mit dem Vorsprung 8 weist eine parallel bzw. im Wesentlichen parallel zur Gewindeachse bzw. Mittelachse M angeordnete offene Endfläche 82 auf. Die Endfläche 82 ist an beiden stirnseitigen Enden offen, so dass sich der Vorsprung 8 über die stirnseitigen Enden der Bodenfläche 72 hinaus bewegen kann.

Der Vorsprung 8 ist 2-teilig ausgebildet, wobei die beiden Teile bezüglich der Mittelachse M sich gegenüberliegend angeordnet sind. Diese beiden Teile sind auf gleicher Höhe in Richtung der Mittelachse M angeordnet.

Der obere Abschnitt 58 und der untere Abschnitt 59 des zweiten Elements 5 sind jeweils 2-teilig ausgebildet, wobei die jeweiligen beiden Teile bezüglich der Mittelachse M sich gegenüberliegend angeordnet sind. Die jeweiligen 2 Teile sind auf gleicher Höhe in Richtung der Mittelachse M angeordnet.

Durch die jeweilige 2-teilige Ausführung sowohl der oberen und unteren Abschnitte 58, 59 als auch des Vorsprungs 8 kann eine optimale und großflächige Kraftübertragung bei einer gleichzeitig guten Beweglichkeit des ersten und des zweiten Elements 4, 5 in Längsrichtung L zueinander und bspw. in einer T-Nut erzielt werden.

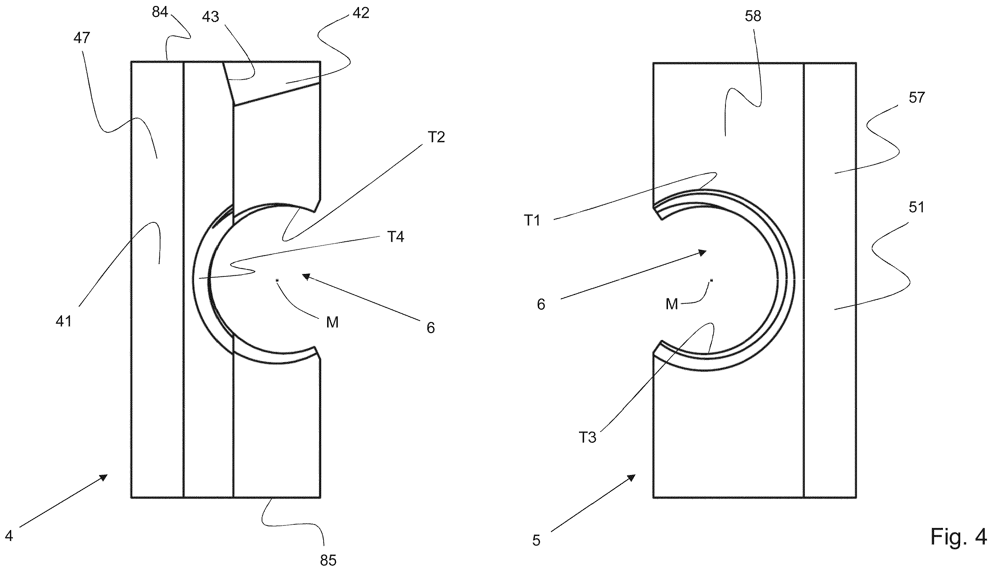

Der Vorsprung 8 weist einen vieleckigen, in diesem Fall viereckigen, Querschnitt auf und hat drei zueinander im Wesentlichen rechtwinklige äußere Führungsflächen 81, 83 und eine Endfläche 82 und stirnseitige Abschlussflächen 84, 85, die zu den äußeren Führungsflächen 81, 83 und der Endfläche 82 derart angeordnet sind, dass die stirnseitige Abschlussfläche 84 und die äußere Führungsfläche 81 eine Einführhilfe 42, siehe bspw. Figur 4, bilden.

Als Gegenstück zur Aufnahme des Vorsprungs 8 hat die Nut 7 drei zueinander im Wesentlichen rechtwinklige innere Führungsflächen 71, 73 und eine Bodenfläche 72. Möglich wäre bspw., statt der viereckigen Form des Vorsprungs 8 und der Nut 7 in Figur 3, auch eine dreieckige Form des Vorsprungs 8 und eine, entsprechende geformte, dreieckige Nut 7.

Figur 4 zeigt Einführhilfen 42, 43. Dazu weist das erste Element 4 an einem stirnseitigen Ende abgeschrägte Flächen mit einem vorbestimmten Winkel auf. Im Allgemeinen wird eine abgeschrägte Fläche an einer beliebigen Werkstückkante als Fase bezeichnet, in diesem Fall an den Kanten des Spannelements 1 und/oder Elemente 4, 5. Demnach sind die Einführhilfen 42, 43 abgeschrägte bzw. angefaste Bereiche, die von entsprechenden Führungsflächen 48 wegführen. Typisch sind Fasen mit einem vorbestimmten Winkel von 20-40°, bevorzugt bspw. 30° denkbar. Die Einführhilfen 42, 43, also stirnseitig ausgebildete Fasen in Figur 4, erleichtern das Ineinanderschieben der Elemente 4, 5 und verhindern ein Verkanten der Elemente 4, 5 beim Zusammensetzten des Spannelements 1. Einführhilfen, wie die Einführhilfen 42, 43, sind nicht auf die Stirnseite des ersten Elements 4, wie in Figur 4 gezeigt, beschränkt. Bspw. können auch die Kanten zwischen den äußeren Führungsflächen 81, 83 und der Endfläche 82 auf der Innenseite des ersten Elements 4 angefast und als Einführhilfen vorgesehen werden. Darüber hinaus können Einführhilfen an weiteren Kanten des ersten Elements 4 derart angebracht sein, dass das zweite Element 5 leichter eingeführt werden kann und umgekehrt. Entsprechend können Einführhilfen auch an Kanten des zweiten Elements 5 ausgebildet werden, bspw. stirnseitig an den Kanten 581, 582, 583, 591, 592, 593 der oberen und unteren Abschnitten 58, 59, wie bspw. in Figur 6 gezeigt. Die Fasen sind nicht dargestellt.

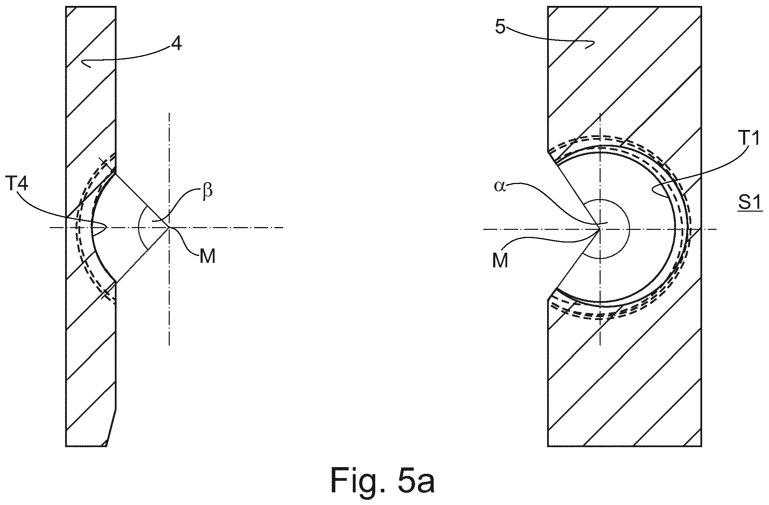

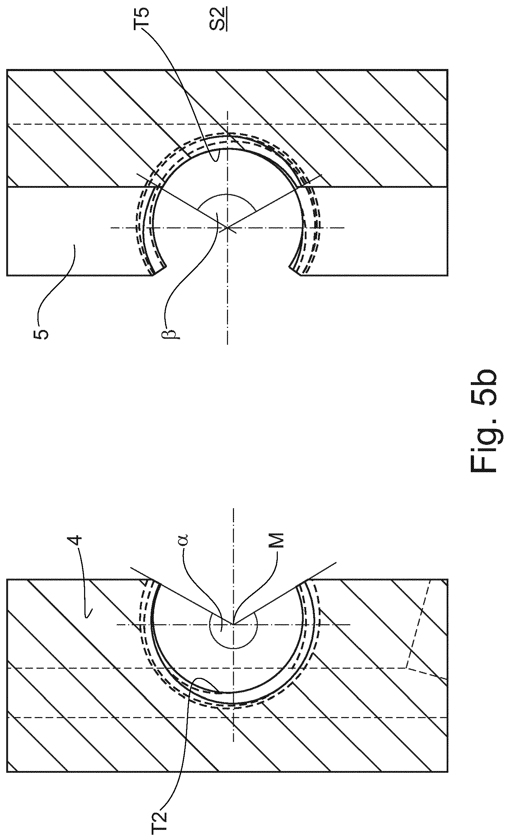

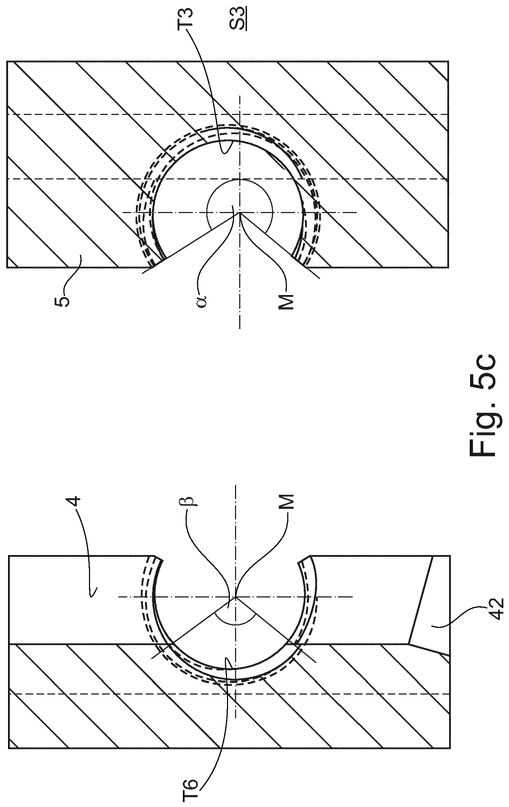

Die Figuren 5a-c zeigen die Schnitte S1, S2 und S3 entlang der Mittelachse M aus Figur 3. Hierbei ist erkennbar, dass jedes der Elemente 4, 5 zumindest einen Großsegment-Innengewindeabschnitt T1, T2, T3 mit einem Winkel α von mehr als 180° und jedes der Elemente 4, 5 Kleinsegment-Innengewindeabschnitte T4, T5, T6 mit einem Winkel β von weniger als 180° aufweist. Diese wechseln sich in den Elementen 4, 5 ab, das heißt, wie in den Schnitten S1, S2 und S3 in den Figuren 5a-c erkennbar, ist der Großsegment-Innengewindeabschnitt T1 im zweiten Element 5, der Großsegment-Innengewindeabschnitt T2 im ersten Element 4 und der Großsegment-Innengewindeabschnitt T3 wiederum im zweiten Element 5 vorgesehen.

Der Winkel α liegt zwischen 200° - 300°, weiter bevorzugt zwischen 220° - 280° und weiter bevorzugt im Wesentlichen bei 270°. Der Winkel β liegt zwischen 60° - 160°, weiter bevorzugt zwischen 80° - 140° und weiter bevorzugt im Wesentlichen bei 90°.

Ebenfalls ist in den Figuren 5a-c gezeigt, dass zu jedem Großsegment-Innenabschnitt T1, T2, T3 ein Kleinsegment-Innengewindeabschnitt T4, T5, T6 im jeweils anderen Element 4, 5 angeordnet ist, so dass in einem zusammengesetzten Zustand je ein Großsegment-Innengewindeabschnitt T1, T2, T3 mit einem entsprechenden Kleinsegment-Innengewindeabschnitt T4, T5, T6 Innengewindeabschnitte des Innengewindes 3 der Durchgangsbohrung 6 von im Wesentlichen 360° bilden. Alle Großsegment-Innengewindeabschnitte T1, T2, T3 zusammen mit den Kleinsegment-Innengewindeabschnitten T4, T5, T6 bilden das vollständiges Innengewinde 3 der Durchgangsbohrung 6, d.h. ein Innengewinde von im Wesentlichen 360°. Das bedeutet, die jeweiligen Großsegment-Innenabschnitte T1, T2, T3 mit einem entsprechenden Kleinsegment-Innengewindeabschnitt T4, T5, T6 fluchten.

Figur 7 zeigt wie das Spannelement 1 in einer Öffnung 10, insbesondere in einer T-Nut, eines Profils 11 verwendet wird. Dazu wird das erste Element 4 in die Öffnung 10 und dann das zweite Element 5 in die Öffnung 10 eingesetzt, und/oder umgekehrt, und innerhalb der Öffnung 10 ineinander geschoben bis die Großsegment-Innengewindeabschnitte T1, T2, T3 und die Kleinsegment-Innengewindeabschnitte T4, T5, T6 der Elemente 4, 5 fluchten. Beim Ineinanderschieben greift der Vorsprung 7 des ersten Elements 4 in die Nut 7 des zweiten Elements 5 ein und die Nut 7 nimmt den Vorsprung 8 auf, wobei die inneren Führungsflächen 71, 73 und die Bodenfläche 72 der Nut 7 und die äußeren Führungsflächen 81, 83 und die Endfläche 83 des Vorsprungs 8 in Kontakt treten bzw. entsprechend geführt werden.

Wie in Figur 7 gezeigt, wird ein Befestigungsmitttel 12 durch eine Öffnung 10 auf der Oberseite des Profil 11 in das Spannelement 1 eingeführt, und die Elemente 4, 5 werden zueinander fixiert. Das Spannelement 1 wird von innen gegen die Vorstehungen 41, 51 des Profil 11 gezogen. Das bedeutet, dass die Vorstehungen 41, 51 der Elemente 4, 5 über die Kontaktflächen 47, 57 in die jeweiligen Hinterschneidungen 91, 92 des Profils 11 bzw. der Öffnung 10 eingreifen und somit eine Spannkraft entsteht, auf ein zu befestigendes Werkstück 14 übertragen wird und bewirkt, dass das Werkstück 14 am Profil befestigt bleibt. Wie in Figur 7 gezeigt, kann hierbei, je nach Werkstück 14, zusätzlich eine Adapterplatte 13 in Form einer Spannpratze verwendet werden.

Abschließend kann festgehalten werden, dass die vorliegende Erfindung ein Spannelement 1 betrifft, insbesondere einen T-Nutenstein und ein Verfahren zur Anwendung eines Spannelements 1 in der Öffnung 10 eines Profils 11. Das trennbare Spannelement 1 ermöglicht eine vereinfachte und sichere Montage bei einer gleichzeitig hohen Halte- und Sicherungskraft. Besonders vorteilhaft ist, dass die Elemente 4, 5 getrennt voneinander in die Öffnung 10 des Profils 11 von einer Oberseite eingesetzt werden und anschließen innerhalb der Öffnung 10 zum Spannelement 1 zusammengesetzt werden. Darüber hinaus hat der bestimmte Aufbau, mit den jeweils abwechselnd angeordneten Großsegment-Innenabschnitten T1, T2, T3 und Kleinsegment-Innengewindeabschnitten T4, T5, T6 in den einzelnen Elementen 4, 5 den Vorteil, dass in einem nicht-zusammengesetzten Zustand des Spannelements 1 die Elemente 4, 5 unabhängig voneinander am Befestigungsmittel 12 halten. In anderen Worten, da jedes der Elemente 4, 5 zumindest einen Großsegment-Innengewindeabschnitt T1, T2, T3 enthält, der mehr als einem halben Innengewinde entspricht, also einem Winkel von mehr als 180°, kann jedes der einzelnen Elemente 4, 5 unabhängig voneinander am Befestigungsmittel 12 befestigt werden, ohne sich davon zu lösen. Insgesamt wird auf diese Weise eine vereinfachte und zeitsparende Montage bzw. Demontage des Spannelements in einer Öffnung 10 eines Profils 11 ermöglicht, bei gleichzeitiger hoher Halte- und Sicherungskraft.

Vorliegende Merkmale, Komponenten und spezifische Details können ausgetauscht und/oder kombiniert werden, um weitere Ausführungsformen zu erstellen in Abhängigkeit des geforderten Verwendungszwecks.

### Bezugszeichenliste:

- 1: Spannelement
- 3: Innengewinde
- 4: trennbare Elemente, erstes Element
- 5: trennbare Elemente, zweites Element
- 6: Durchgangsbohrung
- 7: Nut
- 8: Vorsprung
- 10: Öffnung
- 11: T-Nut
- 12: Schraube
- 13: Adapterplatte
- 14: Werkstück
- 41, 51: Vorstehungen
- 42, 43: Einführhilfen
- 47, 57: Kontaktflächen
- 48: Führungsfläche
- 58: oberer Abschnitt
- 59: unterer Abschnitt
- 71, 73: innere Führungsflächen
- 72: Bodenfläche
- 81, 83: äußere Führungsflächen
- 82: Endfläche
- 84, 85: stirnseitige Abschlussflächen
- 91, 92: Hinterschneidungen
- OB: oberer Bereich
- UB: unterer Bereich
- O: Oberseite
- U: Unterseite
- T1, T2, T3: Großsegment-Innengewindeabschnitte
- T4, T5, T6: Kleinsegment-Innengewindeabschnitte
- M: Mittelachse
- L: Längsrichtung
- α, β: Winkel
- 491,591: Endbereiche
- 581, 582, 583, 591, 592, 593: Kanten

## Patentansprüche

1. Spannelement, umfassend
eine Durchgangsbohrung (6) mit einem Innengewinde (3), und
zumindest zwei voneinander trennbare Elemente (4, 5), umfassend ein erstes Element (4) und ein zweites Element (5), die in einem zusammengesetzten Zustand jeweilige Innengewindeabschnitte (T1, T2, T3) der Durchgangsbohrung (6) bilden,
**dadurch gekennzeichnet, dass**
jedes der Elemente (4, 5) zumindest einen Großsegment-Innengewindeabschnitt (T1, T2, T3) mit einem Winkel α von mehr als 180° aufweist, und
sich die Großsegment-Innengewindeabschnitte (T1, T2, T3) der jeweiligen Elemente (4, 5) entlang einer Mittelachse (M) der Durchgangsbohrung (6) abwechseln, wobei
jedes der Elemente (4, 5) zumindest einen Kleinsegment-Innengewindeabschnitt (T4, T5, T6) mit einem Winkel β von weniger als 180° aufweist, wobei
sich die Kleinsegment-Innengewindeabschnitte (T4, T5, T6) der jeweiligen Elemente (4, 5) entlang der Mittelachse (M) abwechseln.

2. Spannelement nach Anspruch 1, wobei
jeweils einer der zumindest einen Großsegment-Innengewindeabschnitte (T1, T2, T3) des ersten Elements (4) mit jeweils einem der Kleinsegment-Innengewindeabschnitte (T4, T5, T6) des zweiten Elements (5) fluchtet und das Innengewinde (3) der Durchgangsbohrung (6) mit einem Winkel von im Wesentlichen 360° bildet.

3. Spannelement nach Anspruch 1, wobei der Winkel α zwischen 200° und 300°, weiter bevorzugt zwischen 220° und 280° und weiter bevorzugt im Wesentlichen bei 270° beträgt.

4. Spannelement nach Anspruch 1, wobei der Winkel β zwischen 60° und 160°, weiter bevorzugt zwischen 80° und 140° und weiter bevorzugt im Wesentlichen bei 90° beträgt.

5. Spannelement nach Anspruch 1, wobei
das erste Element (4) einen Vorsprung (8) und das zweite Element (5) eine Nut (7) aufweist, und
im zusammengesetzten Zustand der Elemente (4, 5), der Vorsprung (8) des ersten Elements (4) in der Nut (7) des zweiten Elements (5) angeordnet ist.

6. Spannelement nach Anspruch 5, wobei der Vorsprung (8) den Großsegment-Innengewindeabschnitt (T1, T2, T3) umfasst, und die Nut (7) den fluchtenden Kleinsegment-Innengewindeabschnitt (T4, T5, T6) umfasst.

7. Spannelement nach einen der Ansprüche 5 oder 6, wobei
die Nut (7) beidseitig eine nach außen in Längsrichtung L offene Bodenfläche (72) aufweist und das erste Element (4) eine in Längsrichtung L offene Endfläche (82) aufweist, zum Bewirken einer Bewegbarkeit des Vorsprungs (8) in der Nut (7) in Längsrichtung L.

8. Spannelement nach zumindest einem der Ansprüche 5 bis 7, wobei
der Vorsprung (8) drei zueinander im Wesentlichen rechtwinklige äußere Führungsflächen (81, 83) und eine Endfläche (82) und die Nut (7) drei zueinander im Wesentlichen rechtwinklige innere Führungsflächen (71, 73) und eine Bodenfäche (72) aufweist.

9. Spannelement nach Anspruch 1, wobei
die Elemente (4, 5) verzahnt ineinandergreifen.

10. Spannelement nach Anspruch 1, wobei
die Elemente (4, 5) einen teilbaren T-Nutenstein für eine Öffnung (10), insbesondere T-Nut, bilden.

11. Spannelement nach Anspruch 1, wobei
die Elemente (4, 5) an ihren unteren Bereichen jeweilige Vorstehungen (41, 51) aufweisen und in entsprechende Hinterschneidungen (91, 92) einer Öffnung (10), insbesondere einer T-Nut eingreifen.

12. Verfahren zur Anwendung eines Spannelements (1) nach zumindest einem der Ansprüchen 1 bis 10 in eine Öffnung (10), insbesondere eine T-Nut, mit den folgenden Schritten:
Einsetzen des ersten Elements (4) in die Öffnung (10), und Einsetzen des zweiten Elements (5) in die Öffnung (10), derart, dass
der Vorsprung (8) in die Nut (7) des zweiten Elements (5) eingreift,
die Nut (7) den Vorsprung (8) des ersten Elements (4) aufnimmt,
die inneren Führungsflächen (71, 73) und die Bodenfläche (72) der Nut (7) und die äußeren
Führungsflächen (81, 83) und die Endfläche (82) des Vorsprungs (8) in Kontakt treten,
die Großsegment-Innengewindeabschnitte (T1, T2, T3) und die Kleinsegment-Innengewindeabschnitte (T4, T5, T6) fluchten, und
die Vorstehungen (41, 51) der Elemente (4, 5) in die jeweiligen Hinterschneidungen (91,92) der Öffnung (10), insbesondere der T-Nut (11), eingreifen, und
Einschrauben einer zum Innengewinde (3) passenden Schraube (12) zum Fixieren der Elemente (4, 5) zueinander und zum Verspannen des Spannelements (1) in der Öffnung (10), insbesondere der T-Nut.

## Claims

1. A tensioning element comprising
a through bore (6) with an internal thread (3), and
at least two separable elements (4, 5) comprising a first element (4) and a second element (5) which in an assembled state form respective internal thread portions (T1, T2, T3) of the through bore (6),
**characterized in that**
each of the elements (4, 5) has at least one large-segment internal thread portion (T1, T2, T3) with an angle α of more than 180°, and
the large-segment internal thread portions (T1, T2, T3) of the respective elements (4, 5) alternate along a central axis (M) of the through bore (6), wherein
each of the elements (4, 5) has at least one small-segment internal thread portion (T4, T5, T6) with an angle β of less than 180°, wherein
the small-segment internal thread portions (T4, T5, T6) of the respective elements (4, 5) alternate along the central axis (M).

2. The tensioning element according to claim 1, wherein
in each case one of the at least one large-segment internal thread portions (T1, T2, T3) of the first element (4) is aligned with in each case one of the small-segment internal thread portions (T4, T5, T6) of the second element (5) and forms the internal thread (3) of the through bore (6) with an angle of substantially 360°.

3. The tensioning element according to claim 1, wherein the angle α is between 200° and 300°, further preferably between 220° and 280° and further preferably substantially at 270°.

4. The tensioning element according to claim 1, wherein the angle β is between 60° and 160°, further preferably between 80° and 140° and further preferably substantially at 90°.

5. The tensioning element according to claim 1, wherein
the first element (4) has a projection (8) and the second element (5) has a groove (7), and
in the assembled state of the elements (4, 5), the projection (8) of the first element (4) is arranged in the groove (7) of the second element (5).

6. The tensioning element according to claim 5,
wherein the projection (8) comprises the large-segment internal thread portion (T1, T2, T3), and
the groove (7) comprises the aligned small-segment internal thread portion (T4, T5, T6).

7. The tensioning element according to one of claims 5 or 6, wherein
the groove (7) has on both sides a bottom surface (72) open outwardly in the longitudinal direction L and the first element (4) has an end surface (82) open in the longitudinal direction L, for effecting a movability of the projection (8) in the groove (7) in the longitudinal direction L.

8. The tensioning element according to at least one of claims 5 to 7, wherein
the projection (8) has three outer guide surfaces (81, 83) substantially at right angles to one another and an end surface (82) and the groove (7) has three inner guide surfaces (71, 73) substantially at right angles to one another and a bottom surface (72).

9. The tensioning element according to claim 1, wherein
the elements (4, 5) mesh with one another in a toothed manner.

10. The tensioning element according to claim 1, wherein
the elements (4, 5) form a divisible T-slot block for an opening (10), in particular a T-slot.

11. The tensioning element according to claim 1, wherein
the elements (4, 5) have respective projections (41, 51) at their lower regions and engage in corresponding undercuts (91, 92) of an opening (10), in particular a T-slot.

12. A method for using a tensioning element (1) according to at least one of claims 1 to 10 in an opening (10), in particular a T-slot, comprising the following steps:
inserting the first element (4) into the opening (10), and
inserting the second element (5) into the opening (10), such that
the projection (8) engages in the groove (7) of the second element (5),
the groove (7) receives the projection (8) of the first element (4),
the inner guide surfaces (71, 73) and the bottom surface (72) of the groove (7) and the outer guide surfaces (81, 83) and the end surface (82) of the projection (8) come into contact,
the large-segment internal thread portions (T1, T2, T3) and the small-segment internal thread portions (T1, T2, T3) engage in the groove (7) of the second element and the inner thread portions (T4, T5, T6) are aligned, and
the projections (41, 51) of the elements (4, 5) engage in the respective undercuts (91, 92) of the opening (10), in particular the T-slot (11), and
screwing in a screw (12) matching the internal thread (3) for fixing the elements (4, 5) relative to one another and for tensioning the tensioning element (1) in the opening (10), in particular the T-slot.

## Revendications

1. Elément de serrage comprenant
un trou traversant (6) avec un filetage interne (3), et
au moins deux éléments séparables (4, 5) comprenant un premier élément (4) et un second élément (5) qui, dans un état assemblé, forment des parties de filetage interne respectives (T1, T2, T3) du trou traversant (6),
**caractérisé en ce que**
chacun des éléments (4, 5) a au moins une partie de filetage interne de grand segment (T1, T2, T3) avec un angle α supérieur à 180°, et
les parties de filetage interne de grand segment (T1, T2, T3) des éléments respectifs (4, 5) alternent le long d'un axe central (M) du trou traversant (6), dans lequel
chacun des éléments (4, 5) a au moins une partie de filetage interne de petit segment (T4, T5, T6) avec un angle β inférieur à 180°, dans lequel
les parties de filetage interne de petit segment (T4, T5, T6) des éléments respectifs (4, 5) alternent le long de l'axe central (M).

2. Elément de serrage selon la revendication 1, dans lequel
chacune des au moins une partie de filetage interne de grand segment (T1, T2, T3) du premier élément (4) est alignée avec chacune des parties de filetage interne de petit segment (T4, T5, T6) du deuxième élément (5) et forme le filetage interne (3) du trou traversant (6) avec un angle de sensiblement 360°.

3. Elément de serrage selon la revendication 1, dans lequel l'angle α est compris entre 200° et 300°, plus préférablement entre 220° et 280° et plus préférablement sensiblement à 270°.

4. Elément de serrage selon la revendication 1, dans lequel l'angle β est compris entre 60° et 160°, plus préférablement entre 80° et 140° et plus préférablement sensiblement à 90°.

5. Elément de serrage selon la revendication 1, dans lequel
le premier élément (4) a une saillie (8) et le second élément (5) a une rainure (7), et
dans l'état assemblé des éléments (4, 5), la saillie (8) du premier élément (4) est agencée dans la rainure (7) du second élément (5).

6. Elément de serrage selon la revendication 5,
dans lequel la saillie (8) comprend la partie de filetage interne de grand segment (T1, T2, T3), et
la rainure (7) comprend la partie de filetage interne de petit segment alignée (T4, T5, T6).

7. Elément de serrage selon l'une quelconque des revendications 5 ou 6, dans lequel
la rainure (7) a des deux côtés une surface de fond (72) ouverte vers l'extérieur dans la direction longitudinale L et le premier élément (4) a une surface d'extrémité (82) ouverte dans la direction longitudinale L, pour provoquer une mobilité de la saillie (8) dans la rainure (7) dans la direction longitudinale L.

8. Elément de serrage selon au moins l'une quelconque des revendications 5 à 7, dans lequel la saillie (8) a trois surfaces de guidage externes sensiblement perpendiculaires (81, 83) et une surface d'extrémité (82) et la rainure (7) a trois surfaces de guidage internes sensiblement perpendiculaires (71, 73) et une surface de fond (72).

9. Elément de serrage selon la revendication 1, dans lequel
les éléments (4, 5) s'engrènent de manière dentée.

10. Elément de serrage selon la revendication 1, dans lequel
les éléments (4, 5) forment un coulisseau en T divisible pour une ouverture (10), en particulier une rainure en T.

11. Elément de serrage selon la revendication 1, dans lequel
les éléments (4, 5) ont des saillies respectives (41, 51) sur leurs parties inférieures et s'engagent dans des contre-dépouilles correspondantes (91, 92) d'une ouverture (10), en particulier d'une rainure en T.

12. Procédé d'utilisation d'un élément de serrage (1) selon au moins l'une quelconque des revendications 1 à 10 dans une ouverture (10), en particulier une rainure en T, comprenant les étapes suivantes :
insertion du premier élément (4) dans l'ouverture (10), et
insertion du deuxième élément (5) dans l'ouverture (10), de sorte que
la saillie (8) s'engage dans la rainure (7) du second élément (5),
la rainure (7) reçoit la saillie (8) du premier élément (4),
les surfaces de guidage internes (71, 73) et la surface de fond (72) de la rainure (7) et les surfaces de guidage externes (81, 83) et la surface de fond (72) de la rainure (7 entrent en contact avec les surfaces de guidage (81, 83) et la surface d'extrémité (82) de la saillie (8),
les parties de filetage interne de grand segment (T1, T2, T3) et les parties de filetage interne de petit segment (T1, T2, T3) s'engagent dans la rainure (7) les parties de filetage interne (T4, T5, T6) sont alignées, et
les saillies (41, 51) des éléments (4, 5) s'engagent dans les contre-dépouilles respectives (91, 92) de l'ouverture (10), en particulier de la rainure en T (11), et
le vissage d'une vis (12) adaptée au filetage interne (3) pour fixer les éléments (4, 5) l'un par rapport à l'autre et pour serrer l'élément de serrage (1) dans l'ouverture (10), en particulier la rainure en T.
